# FASCICULE DE BREVET EUROPEEN

(11) **EP 2 167 446 B1**
(45) Date de publication et mention de la délivrance du brevet: **18.02.2015**
(21) Numéro de dépôt: 08806103.1
(22) Date de dépôt: 26.06.2008
(51) Int. Cl.: C05F 17/00

(54) **PROCEDE DE COMPOSTAGE A SONDE MOBILE ET DISPOSITIF CORRESPONDANT**
VERFAHREN ZUR KOMPOSTIERUNG MOBILER SONDEN UND ENTSPRECHENDE VORRICHTUNG
MOBILE PROBE COMPOSTING METHOD AND CORRESPONDING DEVICE

(30) Priorité: 28.06.2007 FR 0704667
(43) Date de publication de la demande: 31.03.2010
(73) Titulaire: Veolia Propreté, 92000 Nanterre (FR)
(72) Inventeur: KALLASSY, Monique, F-75015 Paris (FR); LEMAIRE, Olivier, F-60800 Levignen (FR); POITRENAUD, Maelenn, F-95280 Jouy Le Moutier (FR)
(74) Mandataire: Novagraaf Technologies
(86) Numéro de dépôt international: PCT/FR2008/051174
(87) Numéro de publication internationale: WO 2009/004269

(56) Documents cités:
- WO-A-97/01519
- WO-A-03/068709
- CH-A- 521 657
- DE-A1- 3 430 629
- DE-C1- 19 752 991
- FR-A- 1 583 541
- FR-A- 2 303 776
- FR-A- 2 633 487
- FR-A- 2 878 521

## Description

La présente invention concerne le domaine du compostage.

Le compostage est un procédé biologique assurant la décomposition des constituants organiques de sous-produits et déchets, dans des conditions aérobies, en un produit organique stable riche en composés humiques : le compost.

Ces déchets, qu'ils soient des déchets ménagers, déchets verts, boues, déchets agricoles, et/ou déchets industriels sont désignés ci-après par masse organique.

La dégradation naturelle de la matière organique au cours du compostage est effectuée par des agents biologiques (microorganismes) dont l'activité dépend de paramètres physico-chimiques, notamment de la température et de la teneur en oxygène. C'est pourquoi cette activité peut être évaluée par le suivi de la température et de la teneur en oxygène d'une masse organique.

Il est courant de chercher à améliorer l'action de dégradation par l'optimisation des conditions environnementales, notamment par l'aération qui permet de renouveler la teneur en oxygène de la masse organique, favorisant l'activité des bactéries aérobies.

La masse organique est disposée soit dans un récipient, ou enceinte, plat, c'est-à-dire à même le sol ou une surface appropriée, par exemple pour un andain à ciel ouvert, soit dans un récipient ou enceinte partiellement ou totalement couvert, voire dans un réacteur fermé (enceinte totalement close telle qu'un box, caisson, tunnel, container ou hall fermé et dont la taille peut varier typiquement de quelques dizaines à plusieurs centaines de m3).

La masse organique ainsi disposée avec son éventuel récipient (ou enceinte) définit une zone de compostage. Une zone de compostage est formée d'un ensemble tridimensionnel de volumes élémentaires.

Selon un premier de ses aspects, l'invention concerne plus précisément, un procédé de pilotage de l'aération d'une masse organique disposée dans une zone de compostage,
- comprenant des étapes consistant à :
- effectuer une série de mesures d'au moins un paramètre physico-chimique de la zone de compostage,
- comparer le résultat des mesures à un modèle de référence, et
- aérer la masse organique en fonction du résultat de la comparaison.

Il est connu de l'homme du métier le document de l'état de la technique antérieure WO 9012893. Ce brevet propose une sonde stationnaire placée longitudinalement au coeur d'un andain disposé dans une enceinte. La sonde comprend une pluralité de capteurs de température, et permet de mesurer la température lors du déplacement de la matière organique au sein de l'enceinte et de sorte à réguler la température de celui-ci par le contrôle d'un système d'aération de l'enceinte.

Toutefois, un tel enseignement ne peut s'appliquer qu'à des enceintes fermées et la mise en mouvement de la masse organique n'est pas toujours possible, ni toujours souhaitable.

Par ailleurs, du fait de l'hétérogénéité des déchets, les mesures des paramètres physico-chimiques suivis au cours du compostage ne sont pas identiques en tout point d'une masse de déchets en compostage que ce soit en système de compostage ouvert (andain de compostage) ou en réacteur fermé.

Autrement dit, les réactions de dégradation de la matière organique au sein d'une masse organique de compostage ne sont pas homogènes et les valeurs de mesure de ces paramètres physico-chimiques ne sont pas identiques en tout point de la masse en compostage. Le pilotage de l'aération selon l'art antérieur cité s'effectue alors par rapport à une mesure qui n'est pas représentative des réactions dans toute la masse de compost et l'aération n'est donc pas adaptée de manière optimale aux besoins en oxygène des microorganismes qui assurent la biodégradation des déchets.

Il existe d'autres méthodes, basées sur des mesures manuelles en un seul point de la masse organique par une sonde plantée manuellement dans celle-ci. De telles solutions ne sont pas non plus satisfaisantes en ce qu'elles peuvent poser des problèmes de sécurité du personnel effectuant les mesures (sondages), et des problèmes de tassement de la masse en compostage sous le poids dudit personnel qui vient perturber les mesures. En outre elles ne donnent qu'une vision partielle des caractéristiques de la masse organique.

Sont également connus les documents suivants :
D1 (FR2303776) qui concerne un dispositif d'affinage du compost comportant des sondes d'humidité et/ou de température reliées a un calculateur permettant de réguler de manière automatique l'insufflation d'air. Lesdites sondes sont prévues pour être enfoncées dans le compost et celles-ci comprennent un écritoire pour l'inscription du relevé température - humidité en correspondance avec une zone planimétrique des aires de fermentation.
D2 (DE19752991) qui concerne un procédé de réglage de l'aération du compost. Ledit procédé est régulé au moyen d'une tige enfoncée dans le tas de compost comportant des capteurs de température. La tige peut être enfoncée de manière aléatoire en n'importe quel point du tas de compost.
D3 (FR2878521) qui concerne un dispositif d'hygiénisation de déchets sur dalle aéraulique. L'installation comprend des dispositifs de régulation et de mesure du ou des gaz, notamment pour la mesure de l'oxygène ou de tout autre gaz. Les dispositifs de mesure du ou des gaz sont des cannes de prélèvement d'air piquées dans l'andain de compost, le dispositif de régulation du ou des gaz comprend une dalle aéraulique constituée d'un ou plusieurs ventilateurs. L'analyse des prélèvements des gaz pilote les procédés de compostage.
D7 (CH521657) qui concerne une sonde rétractable pouvant mesurer des paramètres physico-chimiques tel que le pH, la pression, la température etc ... Avec un tel dispositif, il est possible de mesurer les paramètres sans danger dans les conditions de fonctionnement. De plus la sonde rétractable permet de mesurer des paramètres avec une sonde délicate car celle-ci est protégée.

La présente invention a pour but de remédier à ces inconvénients en proposant une solution visant à permettre notamment le suivi de l'évolution de la dégradation de la matière organique sur l'ensemble de la masse organique.

Avec cet objectif en vue, le procédé selon l'invention, par ailleurs conforme au préambule cité ci-avant, est caractérisé en ce que l'étape de mesure comprend une étape consistant à, dans première phase, mesurer automatiquement par une sonde rétractable et mobile en translation dans un plan sensiblement horizontal, selon un premier maillage, au moins un paramètre physico-chimique comprenant la température de la zone de compostage,
- la sonde adoptant sélectivement une position de repli au repos, et une position active pour les mesures, la sonde revenant en position de repli entre deux séries de mesures,

Le procédé comprenant en outre une étape consistant à :
- déterminer la position de la sonde par des moyens de positionnement.

Grâce à cette configuration, on peut suivre les paramètres, ainsi que leur évolution, en plusieurs points de mesure dans tout le volume (trois dimensions) de la masse organique.

D'autres caractéristiques du procédé selon l'invention sont plus amplement décrites ultérieurement et dans les revendications dépendantes.

De préférence, pour l'étape de mesure, la sonde est introduite de manière rétractable dans la masse organique.

Dans un mode de réalisation, la position d'un point de mesure est asservie au résultat de l'une des mesures précédentes.

Dans un mode de réalisation, plusieurs sondes selon l'invention peuvent être mises en oeuvre.

Selon un autre de ses aspects, l'invention concerne également un dispositif de pilotage de l'aération d'une masse organique disposée dans une zone de compostage, susceptible de mettre en oeuvre le procédé selon l'invention, comprenant :
- une zone de compostage,
- des moyens d'aération (400),
- des moyens de mesure (10) d'au moins un paramètre physico-chimique comprenant au moins la température en, au moins un point de la zone de compostage, et
- des moyens de régulation des moyens d'aération (300), couplés aux moyens de mesure.

Le dispositif selon l'invention est caractérisé en ce qu'il comprend en outre des moyens de positionnement, et en ce que les moyens de mesure (10) comprennent une sonde rétractable adoptant sélectivement une position de repli au repos et une position active pour les mesures, la sonde revenant en position de repli entre deux séries de mesures, la sonde étant également mobile dans un plan sensiblement horizontal par les moyens de positionnement et susceptible d'effectuer automatiquement une mesure en un point de mesure librement sélectionné dans la zone de compostage,
la sonde comprenant en outre un capteur de position.

D'autres caractéristiques du dispositif selon l'invention sont plus amplement décrits ultérieurement et dans les revendications dépendantes.

De préférence, les moyens de mesure comprennent une sonde mobile.

Avantageusement, les moyens de mesure comprennent une sonde rétractable.

La sonde est équipée d'au moins un capteur de mesure d'un paramètre physico-chimique.

Dans un mode de réalisation, la sonde est montée sur un arbre de support, telle que
- la sonde est montée mobile en translation le long de l'arbre de support, et/ou
- l'arbre de support est monté mobile en translation le long d'au moins un rail de guidage.

Dans un mode de réalisation, la sonde est montée sur un bras articulé et/ou télescopique.

Dans un mode de réalisation, les deux modes de réalisation précédents sont combinés, c'est-à-dire, que la sonde est montée sur un bras articulé et/ou télescopique, et que le bras articulé et/ou télescopique est monté sur un arbre de support, tel que
- le bras est monté mobile en translation le long de l'arbre de support, et/ou
- l'arbre de support est monté mobile en translation le long d'au moins un rail de guidage.

Dans un mode de réalisation, la zone de compostage est équipée d'une pluralité de points d'aération, dont le fonctionnement d'au moins l'un d'entre eux est susceptible d'être piloté par les moyens de régulation.

Avantageusement, la sonde est munie de moyens de positionnement, en l'espèce un capteur de position (deux ou trois dimensions). Le positionnement selon un axe vertical peut aussi être simplement déterminé par la connaissance de l'altitude initiale et de l'allongement des bras sur lesquels la sonde est montée.

Ces moyens de positionnement permettent d'améliorer le pilotage du compostage, par exemple en permettant à la sonde de revenir aux points de mesures antérieurs où les valeurs des paramètres physico-chimiques sont défavorisées par rapport au processus de dégradation de la matière organique.

De préférence, la sonde de mesure comprend plusieurs capteurs, éventuellement identiques, définissant respectivement plusieurs points de mesure des paramètres physico-chimiques situés le long de la sonde.

Grâce à cette configuration, plusieurs mesures peuvent être effectuées simultanément en une pluralité de points de mesures.

Dans un mode de réalisation, chaque capteur mesure un paramètre physico-chimique particulier.

Grâce à l'invention, on obtient un système automatique permettant une meilleure sécurité du personnel puisqu'aucune intervention sur la masse en compostage n'est nécessaire pour l'introduction ou le retrait d'une sonde. En outre, on évite de ce fait tout tassement de la masse en compostage lié à une intervention humaine en cours du compostage.

Cette sonde est capable de mesurer la température sur plusieurs profondeurs et de mesurer un ou plusieurs types de gaz ainsi que d'autres paramètres physico-chimiques. De préférence, le paramètre physico-chimique est compris dans le groupe comprenant (température, pH, humidité, conductivité électrique, conductivité thermique, pression partielle, teneur en gaz tels que O2/CO2/CH4/N2/COV, etc.).

Ainsi l'invention permet le pilotage d'un procédé de compostage par une sonde mobile permettant de réaliser un ensemble de mesures multipoints.

Grâce à cotte configuration, la mesure des différents paramètres physico-chimiques de la masse organique peut être effectuée par une sonde mobile capable d'effectuer des mesures en tout point de la masse de compost. Et le pilotage de l'aération peut être assuré grâce à ces mesures.

L'invention permet par conséquent de contrôler l'évolution de la dégradation de la matière organique en tout point de la masse organique grâce à des mesures dans des volumes élémentaires, d'identifier les points critiques et d'agir éventuellement sur le système de pilotage pour améliorer les conditions de dégradation.

Avantageusement, l'aération (soufflage et/ou aspiration) est pilotée par des moyens, en l'espèce informatiques, qui déterminent notamment le profil du débit d'air en tête d'injection en fonction des valeurs des paramètres mesurés.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure la représente trois configurations d'une sonde mobile selon un mode de réalisation,
- la figure 1b représente un mode de réalisation d'une sonde selon l'invention,
- la figure 2a représente un autre type de sonde mobile selon l'invention, en position de repli,
- la figure 2b représente la sonde de la figure 2a en position active,
- la figure 3 représente un mode de réalisation du dispositif selon l'invention,
- la figure 4 représente un autre mode de réalisation du dispositif selon l'invention,
- la figure 5 illustre un modèle de référence de compostage représentant l'évolution de la température d'une masse organique en fonction du temps.

La sonde selon l'invention est une sonde mobile, elle adopte sélectivement une position de repli au repos, et une position active pour les mesures. Le mobilité de la sonde permet de sélectionner librement un point de mesure appartenant à un volume élémentaire parmi l'ensemble des volumes élémentaires formant la zone de compostage.

Quel que soit son type, chaque capteur mis en oeuvre dans l'invention est connu en soi. Aussi par souci de clarté, aucun capteur n'est décrit ni représenté plus avant. Chaque capteur définit par exemple un point de mesure appartenant à un volume élémentaire parmi l'ensemble des volumes élémentaires formant la zone de compostage.

La configuration représentée à la figure la est particulièrement adaptée aux enceintes de compostage munie de parois verticales et/ou de parois horizontales au-dessus de la masse organique. Lors du remplissage de l'enceinte, la sonde est protégée en position de repli, puis lorsque le remplissage est fait, la sonde est amenée en position active en pénétrant de manière rétractable dans la masse organique.

Une sonde rétractable permet notamment de diminuer les forces de frottements entre la sonde et la matière organique lors d'un mouvement relatif. En outre, cela facilite l'entretien de la sonde et augmente sa longévité car le contact entre la sonde et la matière organique, corrosive, peut n'être établi que pour la durée des mesures, la sonde revenant en position de repli entre deux séries de mesures.

La sonde 10 selon l'invention montée sur une extrémité de bras de support articulés.

L'autre extrémité des bras de support articulés est reliée à des moyens d'attache 30.

En référence à la figure la, la position A représente la sonde 10 selon l'invention montée sur une extrémité de bras de support articulés 20, en position de repli. Dans cette position, la sonde 10 est dans une position sensiblement horizontale et les bras de support articulés sont en position repliée.

La position B représente la sonde 10 selon l'invention en position intermédiaire. Les bras de support articulés 20 sont toujours en position repliée mais la sonde est amenée dans une position sensiblement verticale, dans un mouvement illustré par la flèche pleine, avant son introduction dans la masse à composter.

La position C représente la sonde 10 en position active, c'est-à-dire introduite dans la masse organique 100, par un mouvement sensiblement vertical illustré par la flèche pleine et initié par les bras de support articulés 20 en position dépliée.

La mobilité de la sonde est assurée par l'articulation des bras de support articulés 20.

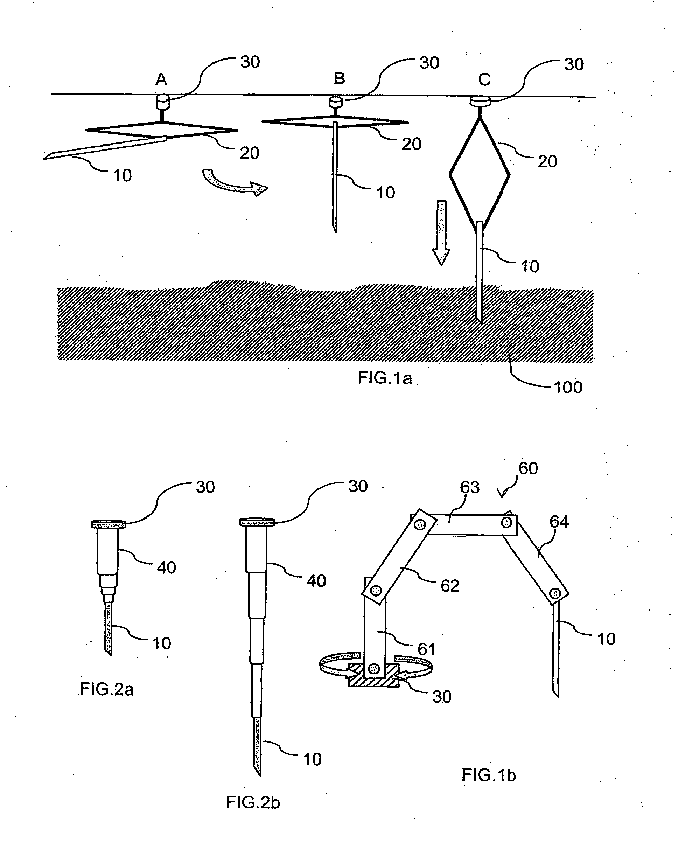

Dans un autre mode de réalisation, représenté à la figure 1b, la sonde 10 est reliée aux moyens d'attache 30 par l'intermédiaire d'un autre bras articulé 60.

Ce bras articulé 60 comprend une pluralité de segments 61-64 articulés deux à deux, en l'espèce montés pivotants selon un axe transversal, et dont le nombre et les dimensions sont variables.

En outre, le segment 61 reliant le bras 60 aux moyens d'attache 30 peut être monté rotatif selon l'axe longitudinal de ce segment 61 reliant le bras 60 aux moyens d'attache, comme indiqué par les flèches pleines.

Dans un autre mode de réalisation, représenté à la figure 2, les bras de support de la sonde sont télescopiques.

La sonde 10 est fixée sur une extrémité d'un bras de support (vérin) télescopique 40 comprenant une pluralité de segments, permettant d'enfoncer la sonde à une profondeur déterminée dans la masse organique.

Le nombre des segments (typiquement 1 à 10) et la longueur de chaque segment (typiquement 25cm) sont déterminés de façon à ce que les paramètres physico-chimiques puissent être mesurés sur toute la hauteur de la masse organique.

La figure 2a représente la sonde en position de repli et la figure 2b la sonde en position active.

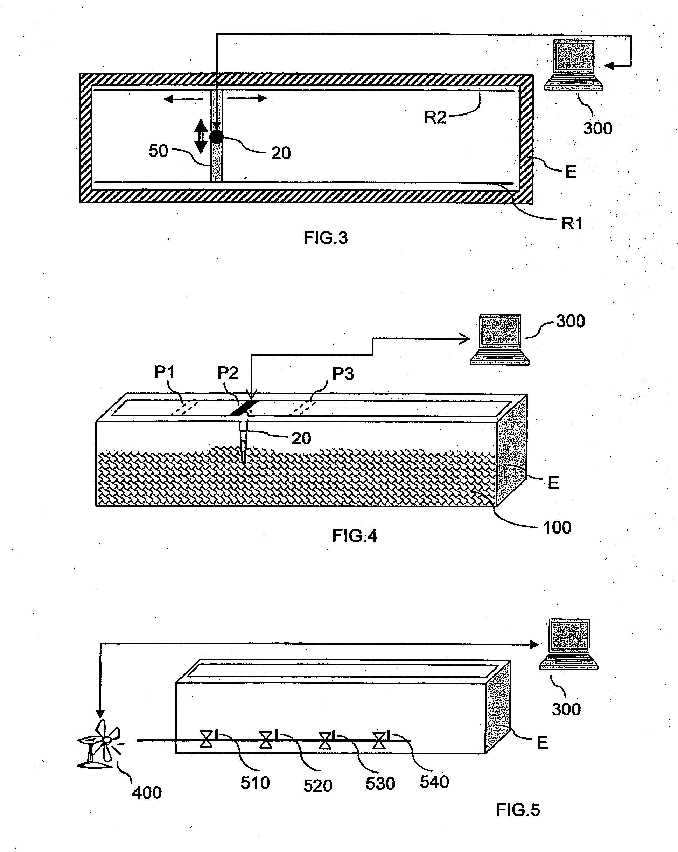

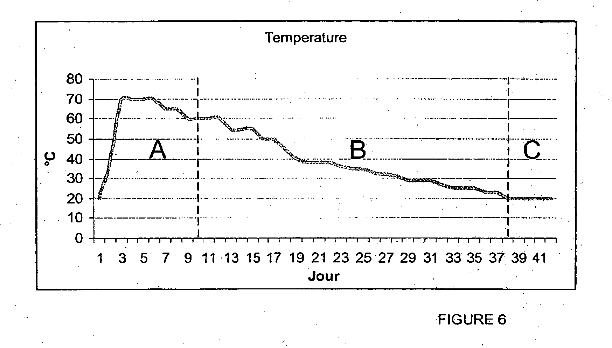

Un autre mode de réalisation, est représenté sur la figure 3.

La sonde 20 peut être la sonde 10 telle que décrite aux figures la, 1b, 2a, ou 2b précédentes.

La configuration représentée à la figure 3 est particulièrement adaptée pour assurer une mobilité dans un plan sensiblement horizontal.

Dans ce mode de réalisation, la sonde est reliée à des moyens de positionnement qui permettent de la positionner en n'importe quel point d'une enceinte E, mécaniquement ou automatiquement.

A cet effet, les moyens de positionnement comprennent par exemple des moyens de support, en l'espèce un arbre de support 50. La sonde 20 peut être montée mobile le long de cet arbre de support dans un mouvement de translation représenté par la double flèche de la figure 3.

La sonde est maintenue à l'arbre de support par les moyens d'attache 30.

Les moyens de positionnement comprennent également une paire de rail de guidage R1 et R2 montés parallèles, et de préférence le long de deux parois opposées sur la longueur de l'enceinte E. Les rails R1 et R2 peuvent être fixés sur les parois, au plafond ou sur des pieds spécifiques sous forme de portique autonome par exemple pour les systèmes de compostage à ciel ouvert.

Les moyens de support 50 sont montés mobiles entre ces rails. La combinaison des mouvements le long des rails et des moyens de support permet de guider la sonde dans l'espace et couvrir la totalité de la surface de l'enceinte E, donc de la masse organique, de manière similaire à un pont mobile.

Par exemple, comme représenté à la figure 4, la sonde effectue une première mesure ou série de mesures en position P1, puis une deuxième en position P2, une troisième en position P3, etc. En chaque position P1, P2, P3, la sonde 20 peut être amenée à différentes profondeurs, par exemple grâce à des bras articulés ou télescopiques tels que précédemment décrits, de sorte à effectuer des mesures sur toute la profondeur de la masse organique 100.

Le positionnement de la sonde est assuré soit mécaniquement, soit automatiquement en reliant la sonde à des moyens informatiques 300 qui permet notamment de piloter les moyens de positionnement.

Outre le positionnement de la sonde et/ou le positionnement des moyens de support, les moyens informatiques 300 sont également configurés pour piloter les fréquences spatiales (pas de mesure et profondeur des mesures) et les fréquences temporelles de mesure des paramètres physico-chimiques choisis par l'opérateur.

Une première phase consiste par exemple à mesurer les valeurs des paramètres physico-chimiques choisis par l'opérateur selon un premier maillage prédéfini, c'est-à--dire un premier pas de mesure, dépendant par exemple du volume de la zone de compostage, sur la totalité de celle-ci.

A titre d'exemple, les pas de mesure sont de 50 cm minimum, en l'espèce un pas de mesure horizontal de 2m, et les profondeurs de 50 cm minimum. Le pas horizontal choisi ainsi que la profondeur de mesure définit en l'espèce un volume élémentaire. Les fréquences de mesure peuvent varier entre 12 h et 7 jours suivant le paramètre physico-chimique mesuré, et/ou selon l'état d'avancement du compostage comme décrit ci-après.

Le pilotage de la sonde permet d'effectuer des mesures des paramètres physico-chimiques d'une manière aléatoire géographiquement ou de préférence définie au préalable.

Avantageusement, les mesures sont effectuées dans tous les volumes élémentaires de la masse organique.

Les résultats des mesures ainsi que la position (horizontale et verticale) de la sonde sont avantageusement enregistrés dans une base de données.

Une fois la première phase effectuée, l'invention comprend avantageusement une étape consistant à comparer, pour un volume élémentaire donné, le résultat des mesures à un modèle de référence.

En fonction de l'écart entre le résultat des mesures et le modèle de référence, en l'espèce (pour des paramètres tels que la température ou la teneur en oxygène) lorsque la valeur mesurée est inférieure (éventuellement supérieure pour d'autres gaz que l'oxygène) à la valeur de référence pour un nombre de jours de compostage donné, des retours de la sonde aux points (volumes élémentaires) les plus défavorisés, et éventuellement de leurs points adjacents, peuvent être effectués afin d'effectuer une deuxième phase de mesures selon un deuxième maillage prédéfini, dont le pas est inférieur au premier maillage, et d'obtenir ainsi une « image » plus fine de la zone de compostage pour les volumes élémentaires les plus défavorisés ; et éventuellement d'assurer un meilleur pilotage de l'aération en tout point de la masse organique.

Ainsi, la position d'un point de mesure peut être asservie au résultat de l'une des mesures précédentes.

La figure 5 illustre un exemple de modèle de référence de l'évolution de la température en fonction du temps. Sur cette figure, on peut définir, à titre purement illustratif, trois états d'avancement de compostage. Dans un premier état d'avancement A, la température de référence est de 70°C pour un premier nombre de jours de compostage (par exemple 1 à 10 jours de compostage). Dans un deuxième état d'avancement B, la température de référence est de 60°C pour un deuxième nombre de jours de compostage (par exemple 11 à 38 jours de compostage). Et dans un troisième état d'avancement C, la température de référence est de 20°C pour un troisième nombre de jours de compostage (par exemple plus de 39 jours de compostage). De préférence, l'invention comprend un état d'avancement par jour de compostage, c'est-à-dire une valeur de température cible par jour de compostage.

Les mesures des paramètres physico-chimiques peuvent être effectuées à une fréquence fixe ou non. En l'espèce, les mesures sont effectuées selon une première fréquence f1 (par exemple 12 à 24h) lors du premier état devancement A, une deuxième fréquence f2 différente (par exemple 1 à 7 jours) lors du deuxième état d'avancement B, et éventuellement une troisième fréquence f3 différente (par exemple 8 à 15 jours) lors du troisième état d'avancement C.

Chacune des fréquences de mesure f1, f2-, f3 dépend avantageusement du type de déchets de la masse organique. De préférence, elles dépendent en outre de l'inertie du système, c'est-à-dire du temps nécessaire à la stabilisation du paramètre mesuré. Elles peuvent également dépendre de l'écart à la valeur de référence du modèle.

Les fréquences de mesure f1, f2, f3 sont définies notamment pour la première phase et éventuellement pour la deuxième phase. On peut toutefois prévoir que la fréquence des mesures f4 pour la deuxième phase soit différente de la fréquence des mesures f1, f2, f3 pour la première phase.

Une fois la deuxième phase de mesure selon un deuxième maillage prédéfini effectuée, on peut revenir pour un cycle de mesures suivant au premier pas de mesure prédéfini.

Grâce à l'invention, on peut ainsi obtenir une cartographie en deux ou trois dimensions de la masse organique, avec un pas éventuellement variable.

Les moyens de pilotage, en l'espèce sous forme de moyens informatiques 300, permettent de piloter le débit et la durée d'aération en fonction de valeurs cibles des paramètres physico-chimiques définis en fonction de l'avancement de la dégradation de la matière organique (les phases du compostage). Typiquement, les valeurs cibles correspondent aux valeurs du modèle de référence pour un nombre de jours de compostage donné.

Le pilotage de l'aération de la masse en compostage se fait en fonction de la modalité d'aération choisie (aération continue, discontinue ou par temporisation).

Les moyens d'aération comprennent des moyens de soufflage 400, en l'espèce un ventilateur, pilotés par les moyens de pilotage. L'air, ou une composition gazeuse appropriée - par exemple enrichie en oxygène - est soufflé et amené à la masse organique, selon plusieurs modes de réalisation.

Dans un premier mode de réalisation, la composition gazeuse est amenée à la masse organique de sorte à ce que la répartition de la composition gazeuse dans ou autour de la masse organique soit homogène. A cet effet, la masse organique est disposée sur une plaque munie de trous ou sur une grille au-dessous de laquelle sont situés soit directement les moyens de soufflage, soit l'extrémité d'une canalisation dont l'autre extrémité est reliée aux moyens de soufflage.

Dans un deuxième mode de réalisation, la composition gazeuse soufflée est amenée à la masse organique par des moyens de canalisation, représentés à la figure 5, de sorte à ce que la répartition de la composition gazeuse dans ou autour de la masse organique soit non homogène.

A cet effet, les moyens de canalisation comprennent des moyens de raccordement aux moyens de soufflage et au moins une tête d'injection, destinée à diriger le flux gazeux vers (ou dans) la masse organique.

Grâce à cet agencement, la distribution de la composition gazeuse peut être peut être adaptée aux besoins locaux, c'est-à-dire que l'on peut effectuer une mesure Mi en un point Zi donné (zone locale de mesure), et déterminer la quantité Qi de composition gazeuse à amener à cet endroit Zi, une mesure Mj en un autre point Zj donné déterminant la quantité Qj de composition gazeuse à amener à cet endroit Zj, les valeurs Qj et Qi pouvant être différentes.

Par exemple, les moyens de canalisation comprennent une pluralité de canalisations dont les têtes d'injection respectives 510, 520, 530, 540 sont disposées à proximité ou dans la masse organique.

Avantageusement, chaque tête d'injection est équipée de moyen de régulation respectif, en l'espèce une électrovanne, pilotée par les moyens de pilotage. Avantageusement, les têtes d'injection sont indépendantes les unes des autres, c'est-à-dire que chacune peut avoir un débit et une durée d'aération propre. De préférence, le débit et la durée d'aération pour chaque tête d'injection est déterminé en fonction des mesures effectuées par la sonde et d'un modèle de référence stocké dans les moyens de pilotage.

De préférence, les têtes d'injection sont en outre mobiles et pilotables, montées sur des canalisations articulées, par exemple télescopiques, de sorte à injecter la composition gazeuse précisément dans la masse organique aux endroits nécessaires dont la position a été déterminée au préalable par les mesures de la sonde, en fonction notamment de l'écart entré le résultat des mesures et le modèle de référence.

Grâce à cette configuration, l'aération de la masse organique peut être sélective et/ou séquentielle, et optimale au regard de l'activité microbiologique.

La présente invention n'est pas limitée aux modes de réalisation précédemment décrits.

Par exemple, selon la configuration de la zone de compostage, la position B de la figure 1 peut représenter la position de repli de la sonde.

Le mouvement d'introduction de la sonde peut être sensiblement diagonal ou horizontal.

Les bras supportant la sonde peuvent comprendre d'autres configurations mobiles, par exemple des systèmes à rotation ou à vis.

La sonde décrite peut être remplacée par une pluralité de sondes.

Les moyens de soufflage peuvent comprendre une pluralité de ventilateurs.

Par souci de concision, la présente description n'a décrit qu'une masse organique immobile. Toutefois, la présente invention peut également être mise en oeuvre dans les enceintes comprenant des moyens de mise en mouvement de la masse organique.

De préférence, la sonde est constituée de matériaux résistants à l'atmosphère corrosive du compostage, par exemple en acier inoxydable.

Les différentes parties de la sonde sont réalisées de préférence en matière solide pouvant supporter la pression que la sonde subit au cours de son introduction dans la masse organique de déchets.

Par exemple, le diamètre des bras et de la sonde sont calculés en fonction de la densité des déchets, l'ordre de grandeur est typiquement du centimètre. La longueur des bras de la sonde est déterminée de préférence en fonction de la hauteur de la masse organique en compostage, de l'ordre de grandeur de quelques mètres, typiquement entre 2 et 4 m.

La sonde est reliée à des moyens de pilotage des moyens d'aération par tout moyen approprié avec ou sans fil.

Grâce à l'invention, une seule sonde peut être utilisée pour effectuer une pluralité de mesures en tout point de la zone de compostage.

Par ailleurs, dans un autre mode de réalisation du dispositif selon l'invention, les moyens de mesure 10 comprennent des moyens de mesure de paramètres physico-chimiques, tel que l'humidité, en l'espèce un capteur infrarouge.

De préférence, les moyens de mesure de l'humidité sont montés sur l'arbre de support 50, de sorte à pouvoir effectuer une série de mesures, éventuellement en continu, en surface au-dessus de la masse organique.

Avantageusement, la mesure de l'humidité de la masse organique peut ainsi être réalisée sans que la sonde soit nécessairement introduite dans la masse organique.

Cette étape de mesure selon l'invention est avantageusement mise en oeuvre après une étape d'homogénéisation de la masse organique.

## Revendications

1. Procédé de pilotage de l'aération d'une masse organique disposée dans une zone de compostage,
comprenant des étapes consistant à :
- effectuer une série de mesures d'au moins un paramètre physico-chimique de la zone de compostage,
- comparer le résultat des mesures à un modèle de référence, et
- aérer la masse organique en fonction du résultat de la comparaison ;
**caractérisé en ce que** l'étape de mesure comprend une étape consistant à, dans première phase, mesurer automatiquement par une sonde rétractable et mobile en translation dans un plan sensiblement horizontal, selon un premier maillage, au moins un paramètre physico-chimique comprenant la température de la zone de compostage,
- la sonde adoptant sélectivement une position de repli au repos, et une position active pour les mesures, la sonde revenant en position de repli entre deux séries de mesures,
Le procédé comprenant en outre une étape consistant à :
- déterminer la position de la sonde par des moyens de positionnement.

2. Procédé de compostage selon la revendication 1, comprenant en outre des étapes consistant à :
- en fonction de l'écart entre le résultat des mesures et le modèle de référence, effectuer une deuxième phase de mesures selon un deuxième maillage inférieur au premier maillage.

3. Procédé de compostage selon la revendication 2, dans lequel le modèle de référence est l'évolution de la température en fonction du nombre de jours de compostage.

4. Procédé de compostage selon l'une quelconque des revendications précédentes, dans lequel la fréquence des mesures (f1, f2, f3) pour la première phase est variable en fonction de l'état d'avancement du compostage.

5. Procédé de compostage selon l'une quelconque des revendications 2 à 4, dans lequel la fréquence des mesures (f4) pour la deuxième phase est différente de la fréquence des mesures (f1, f2, f3) pour la première phase.

6. Procédé de compostage selon l'une quelconque des revendications précédentes, dans lequel l'étape de mesure comprend une étape consistant à enfoncer la sonde à une profondeur déterminée dans la masse organique.

7. Procédé de compostage selon l'une quelconque des revendications précédentes, dans lequel l'étape d'aération comprend une étape consistant à amener à la masse organique une composition gazeuse soufflée par des moyens de canalisation comprenant des têtes d'injection, le débit et la durée d'aération pour chaque tête d'injection étant déterminé en fonction des mesures effectuées par la sonde et d'un modèle de référence.

8. Procédé de compostage selon l'une quelconque des revendications précédentes, comprenant en outre une étape consistant à établir une cartographie en deux ou trois dimensions de la masse organique.

9. Dispositif de pilotage de l'aération d'une masse organique disposée dans une zone de compostage, susceptible de mettre en oeuvre le procédé selon l'une quelconque des revendications précédentes, comprenant :
- une zone de compostage,
- des moyens d'aération (400),
- des moyens de mesure (10) d'un paramètre physico-chimique comprenant au moins la température en au moins un point de la zone de compostage, et
- des moyens de régulation des moyens d'aération (400), couplés aux moyens de mesure,
**caractérisé en ce qu'**il comprend en outre des moyens de positionnement,
et en que les moyens de mesure (10) comprennent une sonde rétractable adoptant sélectivement une position de repli au repos et une position active pour les mesures, la sonde revenant en position de repli entre deux séries de mesures, la sonde étant également mobile dans un plan sensiblement horizontal par les moyens de positionnement et susceptible d'effectuer automatiquement une mesure en un point de mesure librement sélectionné dans la zone de compostage,
la sonde comprenant en outre un capteur de position.

10. Dispositif de compostage selon la revendication 9, dans lequel la sonde est montée sur un arbre de support (50), telle que
- la sonde est montée mobile en translation le long de l'arbre de support, et/ou
- l'arbre de support est monté mobile en translation le long d'au moins un rail de guidage (R1, R2) transversal à l'arbre.

11. Dispositif selon l'une quelconque des revendications 9 à 10, dans lequel la sonde est montée sur un bras articulé et/ou télescopique (20, 40, 60).

12. Dispositif de compostage selon l'une quelconque des revendications 9 à 11, dans lequel la zone de compostage est équipée d'une pluralité de points d'aération (510, 520, 530, 540), dont le fonctionnement d'au moins l'un d'entre eux est susceptible d'être piloté par les moyens de régulation.

13. Dispositif de compostage selon la revendication 12, dans lequel, les points d'aération (510, 520, 530, 540) sont en outre mobiles et pilotables, montés sur des canalisations articulées, de sorte à injecter une composition gazeuse dans la masse organique à des endroits dont la position a été déterminée par les mesures de la sonde, en fonction de l'écart entre le résultat des mesures et un modèle de référence.

14. Dispositif de compostage selon l'une quelconque des revendications 9 à 13, comprenant en outre des moyens de pilotage (300) configurés pour piloter les moyens de positionnement, les fréquences spatiales et les fréquences temporelles de mesure des paramètres physico-chimiques choisis par un opérateur, et piloter le débit et la durée d'aération en fonction de valeurs cibles des paramètres physico-chimiques.

## Patentansprüche

1. Verfahren zur Steuerung der Belüftung einer organischen Masse, die in einer Kompostierungszone angeordnet ist,
umfassend die Schritte, darin bestehend:
- eine Reihe von Messungen mindestens eines physikalisch-chemischen Parameters der Kompostierungszone durchzuführen,
- das Ergebnis der Messungen mit einem Referenzmodell zu vergleichen, und
- die organische Masse in Abhängigkeit vom Ergebnis des Vergleichs zu belüften;
**dadurch gekennzeichnet, dass** der Schritt des Messens einen Schritt umfasst, darin bestehend, in einer ersten Phase automatisch durch eine einziehbare und in Translation bewegliche Sonde in einer im Wesentlichen horizontalen Ebene entlang eines ersten Netzes mindestens einen physikalisch-chemischen Parameter, umfassend die Temperatur der Kompostierungszone, zu messen,
- wobei die Sonde selektiv eine eingeklappte Position in Ruhestellung und eine aktive Position für die Messungen einnimmt, wobei die Sonde zwischen zwei Messreihen in die eingeklappte Position zurückkehrt,
wobei das Verfahren ferner einen Schritt umfasst, darin bestehend:
- die Position der Sonde durch Positioniermittel zu bestimmen.

2. Kompostierungsverfahren nach Anspruch 1, ferner umfassend Schritte, darin bestehend:
- in Abhängigkeit von der Abweichung zwischen dem Ergebnis der Messungen und dem Referenzmodell eine zweite Messphase entlang eines zweiten Netzes unterhalb des ersten Netzes durchzuführen.

3. Kompostierungsverfahren nach Anspruch 2, bei dem das Referenzmodell die Entwicklung der Temperatur in Abhängigkeit von der Anzahl von Kompostierungstagen ist.

4. Kompostierungsverfahren nach einem der vorhergehenden Ansprüche, bei dem die Häufigkeit der Messungen (f1, f2, f3) für die erste Phase in Abhängigkeit vom Zustand des Kompostierungsfortschritts variabel ist.

5. Kompostierungsverfahren nach einem der Ansprüche 2 bis 4, bei dem die Häufigkeit der Messungen (f4) für die zweite Phase zur Häufigkeit der Messungen (f1, f2, f3) für die erste Phase unterschiedlich ist.

6. Kompostierungsverfahren nach einem der vorhergehenden Ansprüche, bei dem der Schritt des Messens einen Schritt umfasst, darin bestehend, die Sonde in einer bestimmten Tiefe in die organische Masse einzusetzen.

7. Kompostierungsverfahren nach einem der vorhergehenden Ansprüche, bei dem der Belüftungsschritt einen Schritt umfasst, darin bestehend, der organischen Masse eine gasförmige Zusammensetzung, die durch Kanalisationsmittel geblasen wird, zuzuführen, umfassend Einspritzköpfe, wobei die Menge und die Dauer der Belüftung für jeden Einspritzkopf in Abhängigkeit von den von der Sonde durchgeführten Messungen und einem Referenzmodul bestimmt werden.

8. Kompostierungsverfahren nach einem der vorhergehenden Ansprüche, ferner umfassend einen Schritt, darin bestehend, eine zwei- oder dreidimensionale Kartografie der organischen Masse herzustellen.

9. Vorrichtung zur Steuerung der Belüftung einer organischen Masse, die in einer Kompostierungszone angeordnet ist, die geeignet ist, das Verfahren nach einem der vorhergehenden Ansprüche einzusetzen, umfassend:
- eine Kompostierungszone,
- Belüftungsmittel (400),
- Mittel (10) zum Messen eines physikalisch-chemischen Parameters, umfassend mindestens die Temperatur an mindestens einem Punkt der Kompostierungszone, und
- Mittel zur Regelung der Belüftungsmittel (400), die an die Messhilfsmittel gekoppelt sind,
**dadurch gekennzeichnet, dass** sie ferner Positioniermittel umfasst,
und dass die Messhilfsmittel (10) eine einziehbare Sonde umfassen, die selektiv eine eingeklappte Position in Ruhestellung und eine aktive Position für die Messungen einnimmt, wobei die Sonde zwischen zwei Messreihen in die eingeklappte Position zurückkehrt, wobei die Sonde auch in einer im Wesentlichen horizontalen Ebene durch die Positioniermittel beweglich und geeignet ist, automatisch eine Messung an einem frei gewählten Messpunkt in der Kompostierungszone durchzuführen, wobei die Sonde ferner einen Positionsfühler umfasst.

10. Kompostierungsvorrichtung nach Anspruch 9, bei der die Sonde auf einer Stützwelle (50) montiert ist, so dass:
- die Sonde in Translation entlang der Stützwelle beweglich montiert ist, und/oder
- die Stützwelle in Translation entlang mindestens einer Führungsschiene (R1, R2) quer zur Welle beweglich montiert ist.

11. Vorrichtung nach einem der Ansprüche 9 bis 10, bei der die Sonde auf einem Gelenk- und/oder Teleskoparm (20, 40, 60) montiert ist.

12. Kompostierungsvorrichtung nach einem der Ansprüche 9 bis 11, bei der die Kompostierungszone mit einer Vielzahl von Belüftungspunkten (510, 520, 530, 540) ausgestattet ist, wobei die Funktion von zumindest einem von ihnen durch die Regelungsmittel gesteuert werden kann.

13. Kompostierungsvorrichtung nach Anspruch 12, bei der die Belüftungspunkte (510, 520, 530, 540) ferner beweglich und steuerbar und auf gelenkigen Kanalisationen montiert sind, so dass eine gasförmige Zusammensetzung in die organische Masse an Stellen eingespritzt wird, deren Position durch die Messungen der Sonde in Abhängigkeit von der Abweichung zwischen dem Ergebnis der Messungen und einem Referenzmodell bestimmt wurde.

14. Kompostierungsvorrichtung nach einem der Ansprüche 9 bis 13, ferner umfassend Steuermittel (300), die derart ausgeführt sind, dass sie die Positioniermittel, die räumlichen und zeitlichen Messhäufigkeiten der von einem Bediener ausgewählten physikalisch-chemischen Parameter steuern und die Menge und Dauer der Belüftung in Abhängigkeit von Zielwerten der physikalisch-chemischen Parameter steuern.

## Claims

1. Method for controlling the aeration of an organic mass arranged in a composting area,
comprising steps consisting in:
- performing a series of measurements of at least one physico-chemical parameter of the composting area,
- comparing the result of the measurements to a reference model, and
- aerating the organic mass as a function of the result of the comparison;
**characterized in that** the measurement step comprises a step consisting in, in first phase, automatically measuring by a probe that is retractable and translationally mobile in a substantially horizontal plane, according to a first meshing, at least one physico-chemical parameter comprising the temperature of the composting area,
- the probe selectively adopting a folded position at rest, and an active position for the measurements, the probe reverting to the folded position between two series of measurements,
the method further comprising a step consisting in:
- determining the position of the probe by positioning means.

2. Composting method according to Claim 1, further comprising steps consisting in:
- as a function of the difference between the result of the measurements and the reference model, performing a second measurement phase according to a second meshing smaller than the first meshing.

3. Composting method according to Claim 2, in which the reference model is the trend of the temperature as a function of the number of composting days.

4. Composting method according to any one of the preceding claims, in which the frequency of the measurements (f1, f2, f3) for the first phase is variable as a function of the state of progress of the composting.

5. Composting method according to any one of Claims 2 to 4, in which the frequency of the measurements (f4) for the second phase is different from the frequency of the measurements (f1, f2, f3) for the first phase.

6. Composting method according to any one of the preceding claims, in which the measurement step comprises a step consisting in driving the probe to a determined depth into the organic mass.

7. Composting method according to any one of the preceding claims, in which the aeration step comprises a step consisting in feeding the organic mass with a gaseous composition blown by piping means comprising injection heads, the flow rate and the aeration time for each injection head being determined as a function of the measurements performed by the probe and of a reference model.

8. Composting method according to any one of the preceding claims, further comprising a step consisting in establishing a two- or three-dimensional mapping of the organic mass.

9. Device for controlling the aeration of an organic mass arranged in a composting area, capable of implementing the method according to any one of the preceding claims, comprising:
- a composting area,
- aeration means (400),
- means (10) for measuring a physico-chemical parameter comprising at least the temperature at at least one point of the composting area, and
- means for regulating the aeration means (400), coupled to the measurement means,
**characterized in that** it further comprises positioning means,
and **in that** the measurement means (10) comprise a retractable probe selectively adopting a folded position at rest and an active position for the measurements, the probe reverting to the folded position between two series of measurements, the probe also being movable in a substantially horizontal plane by the positioning means and capable of automatically performing a measurement at a freely selected measurement point in the composting area,
the probe further comprising a position sensor.

10. Composting device according to Claim 9, in which the probe is mounted on a support shaft (50), such that
- the probe is mounted to be translationally mobile along the support shaft, and/or
- the support shaft is mounted to be translationally mobile along at least one guiding rail (R1, R2) transversal to the shaft.

11. Device according to one of Claims 9 and 10, in which the probe is mounted on an articulated and/or telescopic arm (20, 40, 60).

12. Composting device according to any one of Claims 9 to 11, in which the composting area is equipped with a plurality of aeration points (510, 520, 530, 540), the operation of at least one of which is capable of being controlled by the regulation means.

13. Composting device according to Claim 12, in which the aeration points (510, 520, 530, 540) are further mobile and controllable, mounted on articulated piping, so as to inject a gaseous composition into the organic mass at points whose position has been determined by the measurements of the probe, as a function of the difference between the result of the measurements and a reference model.

14. Composting device according to any one of Claims 9 to 13, further comprising control means (300) configured to control the positioning means, the spatial frequencies and the temporal frequencies of measurement of the physico-chemical parameters chosen by an operator, and control the flow rate and the aeration time as a function of target values of the physico-chemical parameters.
